# EUROPEAN PATENT APPLICATION

(11) **EP 4 622 366 A2**
(43) Date of publication of application: **24.09.2025**
(21) Application number: 25195732.0
(22) Date of filing: 11.03.2021
(51) Int. Cl.: H04W 72/02

(54) **INFORMATION SENDING METHOD AND APPARATUS, INFORMATION RECEIVING METHOD AND APPARATUS, AND TERMINAL AND STORAGE MEDIUM**

(62) Divisional of application: 21929571.4
(71) Applicant: GUANGDONG OPPO MOBILE TELECOMMUNICATIONS CORP., LTD., Dongguan, Guangdong 523860 (CN)
(72) Inventor: ZHAO, Zhenshan, Dongguan, 523860 (CN); ZHANG, Shichang, Dongguan, 523860 (CN); LIN, Huei-Ming, South Yarra, 3141 (AU); DING, Yi, Dongguan, 523860 (CN)
(74) Representative: Mewburn Ellis LLP

(57) **Abstract**

The present application relates to the field of mobile communications. Disclosed are an information sending method and apparatus, and a terminal and a storage medium. The method comprises: a first terminal determining a time range, determining a resource set according to the time range, and sending the resource set to a second terminal in a target time unit, wherein the resource set is used to assist the second terminal with resource selection. In the present application, a first terminal determines a rational time range, and determines, on the basis of the time range, a resource set suitable for the first terminal or not suitable for the first terminal, thereby ensuring that there are no invalid resources in resources sent to a second terminal or that the number of invalid resources is reduced. When the first terminal uses a DRX mechanism, cooperation between the first terminal and the second terminal can be better implemented.

## Description

### TECHNICAL FIELD

The present application relates to the field of mobile communications, and in particular, to an information sending method, an information receiving method, apparatuses, a terminal, and a storage medium.

### BACKGROUND

In order to realize the direct communication between terminals in the Vehicle to Everything (V2X) system, the Side Link (SL) transmission manner is introduced.

In a transmission mode of SL, the terminal needs to perform resource selection in a resource pool through a resource exclusion process and a resource selection process. The resource exclusion process of the terminal can be performed through coordination between the terminals. When the second terminal performs resource selection, auxiliary information from the first terminal may also be considered, so as to further optimize the resource selection process of the second terminal, thereby improving communication reliability.

### SUMMARY

The embodiments of the present application provide an information sending method, an information receiving method, apparatuses, a terminal, and a storage medium, which can improve the accuracy of auxiliary information. The technical solutions are as follows.

According to an aspect of the present application, an information sending method is provided, which is applied in a first terminal, and the method includes:
determining, by the first terminal, a time range;
determining, by the first terminal, a resource set according to the time range;
sending, by the first terminal, a resource set to the second terminal in a target time unit, where the resource set is used for assisting the second terminal in resource selection.

According to another aspect of the present application, an information receiving method is provided, which is applied in a second terminal, and the method includes:
receiving, by the second terminal, a resource set sent by a first terminal in a target time unit, where the resource set is determined by the first terminal within a time range.

According to an aspect of the present application, there is provided an information sending apparatus, the apparatus including:
a processing module, configured to determining a time range;
the processing module being configured to determine a resource set according to the time range;
a sending module, configured to send a resource set to a second terminal in a target time unit, where the resource set is used for assisting the second terminal in resource selection.

According to an aspect of the present application, an information receiving apparatus is provided, the apparatus including:
a receiving module, configured to receive a resource set sent by a first terminal in a target time unit, where the resource set is determined by the first terminal within a time range.

According to an aspect of the present application, a terminal is provided, the terminal including: a processor; a transceiver connected to the processor; a memory for storing executable instructions of the processor; where the processor is configured to load and execute the executable instructions to implement the information sending method or the information receiving method as described in the above aspects.

According to an aspect of the present application, a computer readable storage medium is provided, executable instructions are stored in the computer readable storage medium, and the executable instructions are loaded and executed by a processor to implement the information sending method or the information receiving method described in the above aspects.

According to an aspect of the present application, there is provided a computer program product or computer program, the computer program product or computer program including computer instructions stored in a computer readable storage medium, a processor of a computer device reads the computer instructions from the computer readable storage medium, and the processor executes the computer instructions, so that the computer device executes the information sending method or the information receiving method described in the above aspects.

According to an aspect of the present application, a chip is provided, the chip includes a programmable logic circuit or a program, and the chip is configured to implement the information sending method or the information receiving method described in the above aspects.

The technical solutions provided by the embodiments of the present application include at least the following beneficial effects.

The first terminal determines a reasonable time range, and determines a resource set suitable for itself or not suitable for itself based on the time range, thereby ensuring that there is no invalid resource or there is reduced invalid resources in the resources sent to the second terminal. In the case where the first terminal uses the DRX mechanism, the coordination between the first terminal and the second terminal can also be better realized.

### BRIEF DESCRIPTION OF THE DRAWINGS

In order to illustrate the technical solutions in the embodiments of the present application more clearly, the following briefly introduces the drawings that are used in the description of the embodiments. Obviously, the drawings in the following description are only some embodiments of the present application. For those of ordinary skill in the art, other drawings can also be obtained from these drawings without creative effort.
FIG. 1 is a schematic diagram of sidelink transmission in the related art of the present application;
FIG. 2 is a schematic diagram of sidelink transmission in the related art of the present application;
FIG. 3 is a schematic diagram of sidelink transmission in the related art of the present application;
FIG. 4 is a schematic diagram of a hidden node provided by an exemplary embodiment of the present application;
FIG. 5 is a schematic diagram of a communication system provided by an exemplary embodiment of the present application;
FIG. 6 is a schematic diagram of inter-terminal coordination provided by an exemplary embodiment of the present application;
FIG. 7 is a schematic diagram of DRX provided by an exemplary embodiment of the present application;
FIG. 8 is a time-frequency resource diagram of a terminal using DRX during exemplary implementation provided by an exemplary embodiment of the present application;
FIG. 9 is a flowchart of an information sending method provided by an exemplary embodiment of the present application;
FIG. 10 is a time-frequency resource diagram of an information sending method during exemplary implementation provided by an exemplary embodiment of the present application;
FIG. 11 is a flowchart of an information sending method provided by an exemplary embodiment of the present application;
FIG. 12 is a flowchart of an information sending method provided by an exemplary embodiment of the present application;
FIG. 13 is a flowchart of an information sending method provided by an exemplary embodiment of the present application;
FIG. 14 is a flowchart of an information sending method provided by an exemplary embodiment of the present application;
FIG. 15 is a flowchart of an information sending method provided by an exemplary embodiment of the present application;
FIG. 16 is a flowchart of an information receiving method provided by an exemplary embodiment of the present application;
FIG. 17 is a structural block diagram of an information sending apparatus provided by an exemplary embodiment of the present application;
FIG. 18 is a structural block diagram of an information sending apparatus provided by an exemplary embodiment of the present application;
FIG. 19 is a schematic structural diagram of a terminal provided by an exemplary embodiment of the present application.

### DETAILED DESCRIPTION

In order to make the objectives, technical solutions and advantages of the present application clearer, the embodiments of the present application will be further described in detail below with reference to the accompanying drawings.

First, the terms involved in the embodiments of the present application are briefly introduced:

Vehicle to everything (V2X): It is the key technology of future intelligent transportation system. It mainly studies the vehicle data transmission scheme based on 3GPP communication protocol. V2X communication includes Vehicle to Vehicle (V2V) communication, Vehicle to Infrastructure (V2I) communication and Vehicle to People (V2P) communication. V2X applications may improve driving safety, reduce congestion and vehicle energy consumption, improve traffic efficiency, etc.

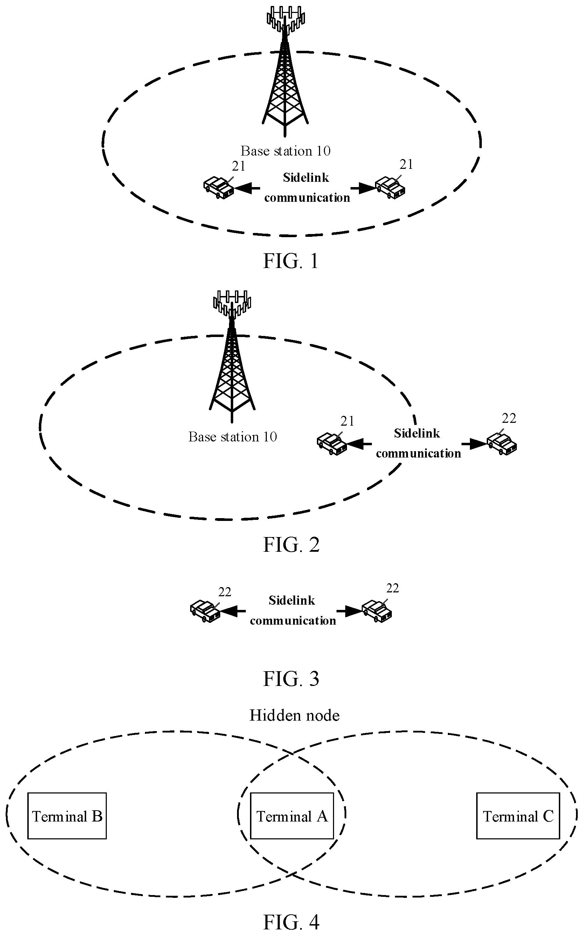

In the Side Link (SL) transmission, according to the network coverage of the terminal in communicating, it can be divided into sidelink communication within network coverage, sidelink communication partially within network coverage, and sidelink communication outside network coverage, which are respectively shown in FIG. 1, FIG. 2 and FIG. 3.

FIG. 1: In the sidelink communication within the network coverage, all the terminals 21 performing the sidelink communication are within the coverage of the same base station 10. Therefore, the above-mentioned terminals 21 can perform sidelink communication based on the same sidelink communication by receiving the configuration signaling of the base station 10.

FIG. 2: In the case of sidelink communication partially within network coverage, some of the terminals 21 performing sidelink communication are located within the coverage of the base station. These terminals 21 can receive the configuration signaling of the base station 10, and perform the sidelink communication according to the configuration of the base station. The terminal(s) 22 located outside the network coverage cannot receive the configuration signaling of the base station 10. In this case, the terminal(s) 22 outside the network coverage determines the sidelink configuration according to pre-configuration information and information carried in the Physical Sidelink Broadcast Channel (PSBCH) sent by the terminals 21 within the coverage of the network, and performs sidelink communication.

FIG. 3: For the sidelink communication outside network coverage, all terminals 22 performing sidelink communication are located outside the network coverage, and all terminals 22 determine a sidelink configuration according to pre-configuration information to perform sidelink communication.

Two transmission modes are defined in 3GPP: the first mode and the second mode.

The first mode: the transmission resource of the terminal is allocated by the base station, and the terminal sends data on the sidelink according to the resource allocated by the base station; the base station can allocate the resource for a single transmission to the terminal, or can allocate the resource for semi-static transmission to the terminal. As shown in FIG. 1, the terminal is located within the coverage of the network, and the network allocates the transmission resource for sidelink transmission to the terminal.

The second mode: the terminal selects one resource in a resource pool for data transmission. As shown in FIG. 3, the terminal is located outside the coverage of the cell, and the terminal autonomously selects a transmission resource from a pre-configured resource pool for sidelink transmission; or in FIG. 1, the terminal autonomously selects a transmission resource from the resource pool configured by the network for sidelink transmission.

In the transmission manner of the above-mentioned second mode, the terminal randomly selects a transmission resource in the resource pool, or selects a transmission resource according to a listening result. Such resource selection method can avoid interference between terminals to a certain extent, but there is still the following problem:

Hidden node problem: as shown in FIG. 4 below, terminal B selects a resource based on listening, and sends sidelink data to terminal A by using the resource. Because terminal B and terminal C are far apart, they cannot listen each other's transmission, terminals B and C may select the same transmission resource, and data sent by terminal C may cause interference to the data sent by terminal B.

Half-duplex problem: when one terminal selects the transmission resource by listening, if the terminal sends sidelink data in a certain slot within the listening window, due to the limitation of half-duplex, the terminal cannot receive data sent by other terminal(s) in this slot, and there is no listening result. Therefore, when the terminal performs resource exclusion, all the resources corresponding to the slot within the resource selection window are excluded to avoid interference with other terminal(s). Due to the limitation of half-duplex, many resources that do not need to be excluded will be excluded by the terminal.

Power consumption problem: in the above listening process, the terminal needs to continuously perform resource listening to determine which resource is available, and the terminal needs to consume a lot of energy to continuously perform resource listening. For a handheld terminal, excessive power consumption will cause the power of the handheld terminal to be quickly consumed. Therefore, how to reduce the power consumption of the terminal is also a problem that needs to be considered in the resource selection process.

Due to various problems existing in the resource selection process in the above-mentioned second transmission mode, the present application introduces a coordination mechanism between User Equipments (UEs) to provide an enhanced resource selection scheme. On the basis of the above manner, a resource set may also be sent by one terminal (UE1) to another terminal (UE2) for UE2 to perform resource selection. The resource set may be, for example, the following information.

Resource set: The resource set is a set of available resources. UE1 obtains the set of available resources according to the listening result, and sends the resource set to UE2. When UE2 selects resources for the sidelink data sent to UE1, UE2 can obtain the resources from the set of available resources, so as to improve the reliability of UE1 receiving the sidelink data; or, the resource set may also be a set of unavailable resources, UE1 reports the resource set to UE2, and UE2 tries to avoid selecting the transmission resources in this resource set when selecting resources.

Specific transmission resources: information sent by UE1 to UE2 includes specific transmission resources, and UE2 sends sidelink data to UE1 by using the transmission resources, at this time, it is equal to that UE1 allocates sidelink transmission resources to UE2.

Compared with the manner in which the terminal autonomously selects transmission resources in the second mode, in the above resource allocation manner, the terminal needs to combine the resource set sent by other terminal during the resource selection process, thereby improving transmission reliability.

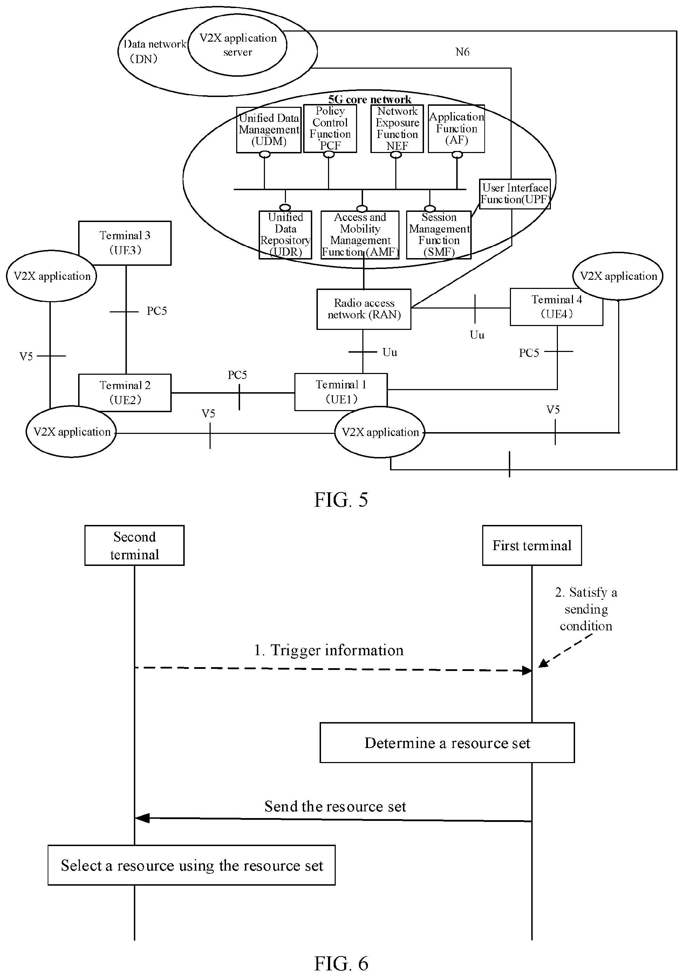

FIG. 5 shows a block diagram of a communication system supporting sidelink transmission provided by an exemplary embodiment of the present application. The communication system may be a schematic diagram of a Non-roaming 5G system architecture, and the system architecture may be applied to a Vehicle to Everything (V2X) service using D2D technology.

The system architecture includes a Data Network (DN), and a V2X Application Server required by the V2X service is set in the data network. The system architecture also includes a 5G core network. The network functions of the 5G core network include: Unified Data Management (UDM), Policy Control Function (PCF), Network Exposure Function (NEF), Application Function (AF), Unified Data Repository (UDR), Access and Mobility Management Function (AMF), Session Management Function (SMF), and User Interface Function (UPF).

The system architecture further includes: a radio access network (New Generation-Radio Access Network, NG-RAN) and exemplarily shown 4 terminals (i.e., terminal 1 to terminal 4). Optionally, each terminal is provided with a V2X Application or an application supporting SL transmission. One or more access network devices, such as base stations (gNBs), are set in the radio access network.

In the system architecture, the data network and the user plane function in the 5G core network are connected through the N6 reference point, and the V2X application server and the V2X application in the terminal are connected through the V1 reference point; the radio access network is connected to the AMF function and UPF function in the 5G core network, and the radio access network is connected to terminal 1 and terminal 5 respectively through the Uu reference point; a plurality of terminals perform sidelink transmission through the PC5 reference point, and a plurality of V2X applications are connected through the V5 reference point. The above reference points may also be referred to as "interfaces".

It should be understood that the "indication" mentioned in the embodiments of the present application may be a direct indication, an indirect indication, or an associated relationship. For example, if A indicates B, it can mean that A directly indicates B, for example, B can be obtained through A; it can also mean that A indicates B indirectly, for example, A indicates C, and B can be obtained through C; it can also mean that there is an association relationship between A and B.

In the description of the embodiments of the present application, the term "corresponding" may indicate that there is a direct or indirect corresponding relationship between the two, or may indicate that there is an associated relationship between the two, or may be a relationship of indicating and being indicated, configuring and being configured, etc.

In the embodiments of the present application, "predefinition" may be implemented by pre-saving corresponding codes, forms, or other means that can be used for indicating relevant information in devices (for example, including terminal devices and network devices). The specific implementation manner is not limited in the present application. For example, predefinition may refer to the definition in the protocol.

The embodiments of the present application propose an SL communication method in which terminals coordinate to select resources. As shown in FIG. 6, the first terminal sends a resource set to the second terminal in two cases, where the resource set is used for assisting the resource selection process of the second terminal.

There are two main trigger mechanisms for this inter-terminal collaboration.

In the first case, the second terminal sends trigger information to the first terminal, where the trigger information is used for triggering the first terminal to send the resource set to the second terminal.

In the second case, the first terminal actively sends the resource set to the second terminal when it determines by itself that the sending condition is satisfied. After receiving the resource set, the second terminal selects the resource by using the resource set. Exemplarily, the sending condition may be that it is detected that the resource sent by the second terminal conflicts with the first terminal, or the current moment matches the sending moment.

### Discontinuous Reception (DRX) mechanism

In the wireless network, when data needs to be transmitted, the user terminal (User Equipment, UE) should always monitor the Physical Downlink Control Channel (PDCCH), and send and receive data according to the instruction message sent by the network side, which results in that the power consumption of the UE and the delay of data transmission are relatively large. Therefore, the DRX energy saving strategy is introduced into the 3GPP standard protocol.

The basic mechanism of DRX is to configure one DRX cycle for the UE in the RRC_CONNECTED state. The DRX cycle consists of "On Duration" and "Opportunity for DRX": within the "On Duration" time (also known as active time), the UE monitors and receives the PDCCH; during the "Opportunity for DRX" time (also known as inactive time or dormant time), the UE does not receive PDCCH to reduce power consumption. Compared with DRX on duration, Opportunity for DRX time may also be called DRX off duration.

In the DRX operation, the terminal controls the active time and the dormant time of the terminal according to some timer parameters configured by the network. For example, when the UE receives the PDCCH that the network schedules the UE within the On Duration period, the UE may activate a timer, such as drx_inactiveTimer, and before the timer expires, the terminal is in the active state.

In the sidelink transmission process, the sidelink DRX mechanism may also be introduced. The terminal detects whether there is a sidelink transmission sent to the terminal during the sidelink DRX on Duration period. If no sidelink transmission is detected, the terminal may switch to the dormant state at the end of the DRX on Duration, and will no longer detect the sidelink data sent by other terminals until the next DRX on Duration period; if a sidelink transmission sent to the terminal is detected during the DRX on Duration period, the terminal may start or reset the DRX timer. Before the DRX timer expires, the terminal is in an active state and continues to detect sidelink data sent by other terminals.

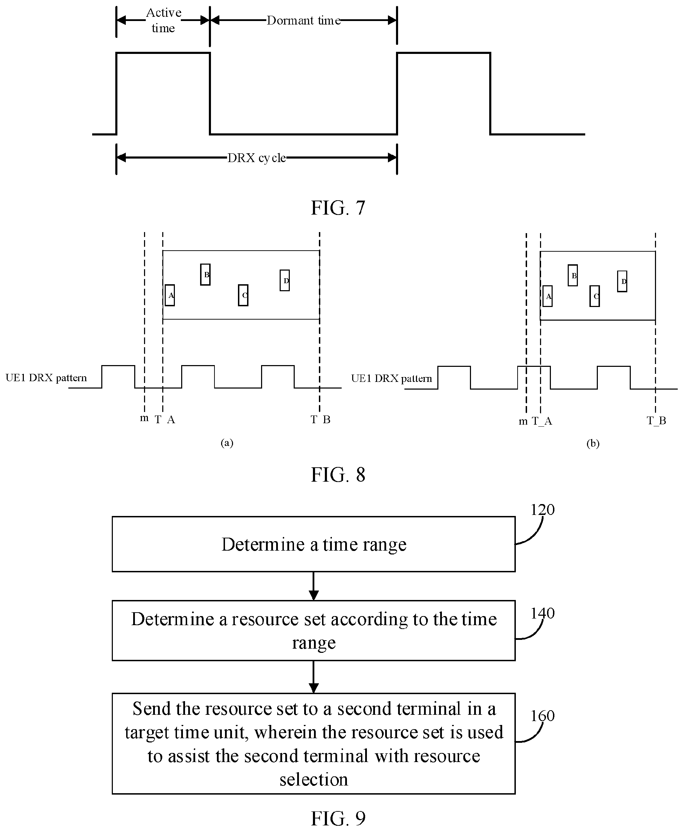

UE1 sends a resource set to UE2, the resource set is the resources belonging to a time range [T_A, T_B], and the resources in the resource set are the resources that UE1 recommends UE2 to use. However, when UE1 is configured with sidelink DRX, at this time, it is unclear how the UE1 determines to send the resource set, specifically, how the UE1 determines a time domain range of the resource set. For example, as shown in FIG. 8, [T_A, T_B] includes 4 resources A/B/C/D, if UE1 sends the resource set to UE2 in slot m, as shown in (a) in FIG.8, since UE1 is in an inactive state in slot m, resource Ais actually an invalid resource, even if the resource set sent by UE1 to UE2 includes resource A, UE2 cannot select this resource for transmission because UE1 is in an inactive state in resource A; as shown in (b) in FIG. 8, if UE1 is in an active state in slot m, UE1 can report resource A to UE2, because UE1 is in an active state in resource A, UE2 may select this resource for sidelink data transmission. It can be seen that the resources in the resource set sent by UE1 to UE2 are related to whether UE1 is in an active state when sending the resource set. To this end, the present application provides the following embodiments.

FIG. 9 shows a flowchart of an information sending method provided by an exemplary embodiment of the present application. This embodiment is exemplified by the method being executed by the first terminal. The method includes the following steps.

**In step** 120: the first terminal determines a time range.

The time range is a time range used for determining a resource set. Exemplarily, the resource set is used for indicating a resource suitable for the first terminal, or used for indicating a resource not suitable for the first terminal.

Optionally, the time range is related to the DRX state of the first terminal. In other words, at least one of the starting point or the end point of the time range is related to the DRX state of the first terminal. This embodiment is exemplified by taking that the starting point of the time range is related to the DRX state of the first terminal.

Exemplarily, the first terminal determines the time range according to its own DRX parameter; or, the first terminal determines the time range according to its own DRX cycle; or, the first terminal determines the time range according to the dormant time in its own DRX cycle; or, the first terminal determines the time range according to the active time in its own DRX cycle. Optionally, the time range includes: at least one of a starting point or an end point of the time range.

Exemplarily, the time range does not include the time when the first terminal is in the dormant time; or the starting point of the time range does not belong to the time when the first terminal is in the dormant time; or the end point of the time range does not belong to the time when the first terminal is in the dormant time; or, any moment in the time range does not belong to the time when the first terminal is in the dormant time.

**In step** 140: the first terminal determines a resource set according to the time range.

The first terminal determines a resource suitable for its own use among one or more candidate resources within the time range, and adds it to the resource set. Alternatively, the first terminal determines, among one or more candidate resources within the time range, a resource that is not suitable for use by itself, and adds it to the resource set. Alternatively, the first terminal determines a candidate resource from one or more candidate resources within the time range, and adds it to the resource set.

The resource suitable for use by the first terminal can also be understood as: a resource recommended for use by the second terminal, or a resource recommended for the second terminal to use when sending data to the first terminal; the resource not suitable for use by the first terminal may be understood as: a resource that is not recommended for use by the second terminal, or a resource that is not recommended for use by the second terminal when sending data to the first terminal.

**In step** 160: the first terminal sends the resource set to the second terminal in a target time unit, where the resource set is used for assisting the second terminal in resource selection.

Taking the target time unit as the slot m as an example, the first terminal sends the resource set to the second terminal in the slot m. In the case that the resource set is used for indicating the resource suitable for the first terminal, when the second terminal sends data to the first terminal, the resource belonging to the resource set is selected as the sending resource; in the case that the resource set is used for indicating the resource not suitable for the first terminal, when the second terminal sends data to the first terminal, a resource that does not belong to the resource set is selected as the sending resource.

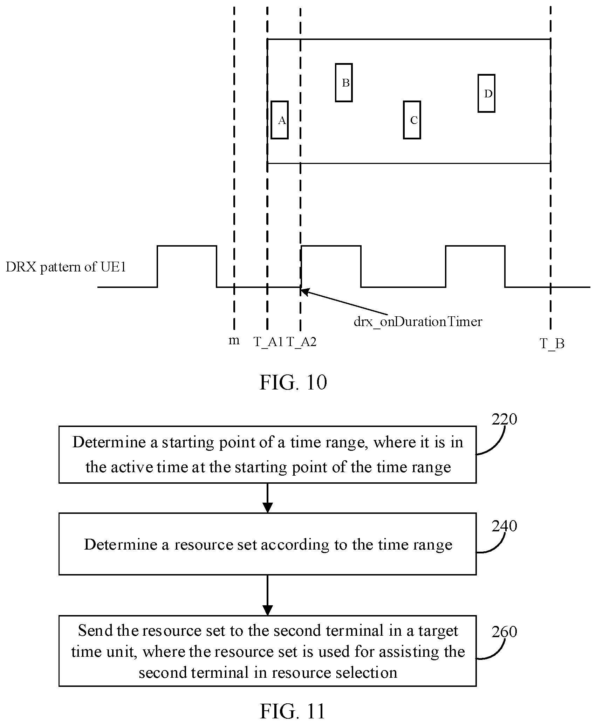

Exemplarily, referring to FIG. 10, UE1 sends a resource set to UE2 in slot m. Since UE1 is in an inactive state in slot m, if the starting position of the resource set is shown in slot T_A1 in FIG. 10, the resource set includes resources such as A/B/C/D. However, since resource A corresponds to the situation in which UE1 is in inactive state, even if the resource set sent by UE1 to UE2 includes resource A, UE2 will not select this resource for data transmission. Therefore, taking the slot T_A1 as the starting position of the resource set will cause the resource A in the reported resource set to be unavailable, that is, invalid resource reporting. At this time, if the slot T_A2 (that is, the time when the first drx_onDurationTimer is activated after the slot m) is used as the starting point of the resource set, the resource set does not include resource A, but includes resources B/C/D, and resources B/C/D are all transmission resources available to UE2. That is, there is no situation in which UE1 reports unavailable resource to UE2.

Exemplarily, the first terminal determines a first time range (T_A1, T_B), determines a first resource set (A/B/C/D) within the first time range, and determines a second resource set (B/C/D) according to a target time unit and the first resource set, where the second resource set corresponds to a second time range (T_A2, T_B). In this case, the second time range corresponds to the time range determined in step 120.

Correspondingly, the second terminal receives the resource set sent by the first terminal in the target time unit, where the resource set is determined by the first terminal within the time range. The time range is related to the DRX state of the first terminal.

To sum up, in the method provided in this embodiment, the first terminal determines a time range related to its own DRX state, and determines a resource set that is suitable for itself or not suitable for itself based on the time range, so as to ensure that there is no invalid resource or there is fewer invalid resources in the resources sent to the second terminal. When the first terminal uses the DRX mechanism, the coordination between the first terminal and the second terminal can be better implemented.

FIG. 11 shows a flowchart of an information sending method provided by an exemplary embodiment of the present application. This embodiment is exemplified by the method being executed by the first terminal. The method includes the following steps.

**In step 220:** the first terminal determines a starting point of a time range.

The first terminal determines the starting point of the time range. Exemplarily, the starting point of the time range does not belong to the time when the first terminal is in the dormant time. That is, the first terminal is in an active state at the starting point of the time range. In other words, the first terminal is in the active time in the DRX cycle at the starting point of the time range.

This step includes but is not limited to at least one of the following manners.

**First manner:** the first terminal determines the starting point of the time range according to a target time unit.

The target time unit is a time unit in which the first terminal sends the resource set to the second terminal. In this embodiment, it is exemplified that the target time unit is the slot m.

Optionally, the first terminal determines the target time unit as the starting point of the time range. Optionally, the first terminal determines a first time unit obtained by increasing the target time unit by a first offset as the starting point of the time range; where the first offset is determined according to a processing time of the first terminal or the second terminal.

For example: T_A=m or T_A=m+T1, where T_A is the starting point of the time range, m is the target time unit, and T1 is the first offset determined according to the processing time of the terminal. The processing time may be the processing time of the first terminal or the second terminal.

**Second manner:** the first terminal determines the starting point of the time range according to the start time of the first DRX timer.

Exemplarily, the first DRX timer is a timer for timing the active time of the first terminal. For example, the first DRX timer is a DRX active state timer (drx_onDurationTimer).

The timer duration of the first DRX timer may be referred to as a first duration for short.

**Third manner:** the first terminal determines the starting point of the time range according to indication information of the second terminal.

The indication information of the second terminal carries the starting point of the time range, and the first terminal obtains the starting point of the time range from the indication information of the second terminal, and then determines the starting point of the time range.

Correspondingly, the first terminal also determines the end point of the time range. The way of determining the end point of the time range includes but is not limited to at least one of the following manners:

Manner A: the first terminal determines the end point of the time range according to the indication information of the second terminal.

The indication information is used for indicating a delay upper bound, or a delay range, or an end point of the resource selection window.

Manner B: the first terminal determines the end point of the time range according to the end time of the first DRX timer.

The end point of the time range is determined according to the DRX parameter. If the second terminal is in the active time at the starting position, the duration of the timer corresponding to the active time can be used to determine the end position.

Manner C: the first terminal determines the end point of the time range according to pre-configuration or network configuration information.

For example, the network configuration information indicates a window length of the time range corresponding to the resource set sent by the terminal; and combined with the starting point of the time range, the end point of the time range can be determined.

**In step 240:** the first terminal determines a resource set according to the time range.

The first terminal determines a resource suitable for its own use among one or more candidate resources within the time range, and adds it to the resource set. Alternatively, the first terminal determines, among one or more candidate resources within the time range, a resource that is not suitable for use by itself, and adds it to the resource set.

**In step 260:** the first terminal sends the resource set to the second terminal in the target time unit, where the resource set is used for assisting the second terminal in resource selection.

Taking the target time unit as the slot m as an example, the first terminal sends the resource set to the second terminal in the slot m. In a case that the resource set is used for indicating resources suitable for the first terminal, when the second terminal sends data to the first terminal, the resources belonging to the resource set are selected as the sending resource; in a case that the resource set is used for indicating the resources not suitable for the first terminal, when the second terminal sends data to the first terminal, the resources that do not belong to the resource set are selected as the sending resource.

To sum up, in the method provided in this embodiment, the first terminal determines a reasonable starting point of the time range, and determines a resource set suitable for itself or not suitable for itself based on the time range, so as to ensure that there is no invalid resource or there is reduced invalid resource in the resources sent to the second terminal. When the first terminal uses the DRX mechanism, the coordination between the first terminal and the second terminal can be better implemented.

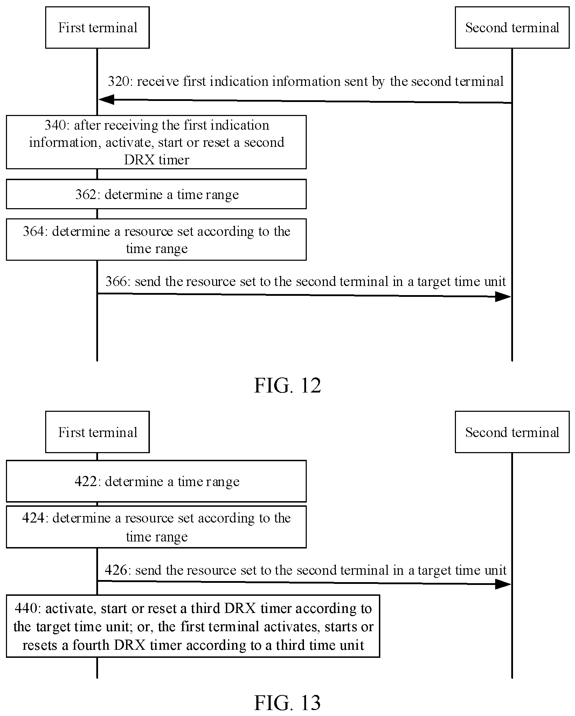

FIG. 12 shows a flowchart of an information sending method provided by another exemplary embodiment of the present application. This embodiment is exemplified by the method being executed by the first terminal. The method includes the following steps.

**In step 320:** the first terminal receives first indication information sent by the second terminal, where the first indication information is used for indicating to send a resource set.

The first indication information is also called trigger information. The first indication information is used for instructing the first terminal to send the resource set to the second terminal.

**In step 340:** after receiving the first indication information, the first terminal activates, starts or resets a second DRX timer.

The first terminal is in an active state before the second DRX timer expires or times out. Exemplarily, the second DRX timer includes a discontinuous reception inactive state timer drx_inactiveTimer.

The timer duration of the second DRX timer may be referred to as a second duration for short. The timeout time unit of the second DRX timer is later than the target time unit.

**In step 362:** the first terminal determines a time range.

**In step 364:** the first terminal determines a resource set according to the time range.

**In step 366:** the first terminal sends the resource set to the second terminal in a target time unit, where the resource set is used for assisting the second terminal in resource selection.

Optionally, the target time unit is a time unit before the second DRX timer expires.

To sum up, the method provided by this embodiment activates, starts or resets the second DRX timer after receiving the first indication information, so that the first terminal is in an active state when sending the resource set, ensuring the successful transmission of the resource set and the successful reception of the subsequent data.

FIG. 13 shows a flowchart of an information sending method provided by another exemplary embodiment of the present application. This embodiment is exemplified by the method being executed by the first terminal. The method includes the following steps.

**In step 422:** the first terminal determines a time range.

**In step 424:** the first terminal determines a resource set according to the time range.

**In step 426:** the first terminal sends the resource set to the second terminal in a target time unit, where the resource set is used for assisting the second terminal in resource selection.

**In step 440:** the first terminal activates, starts or resets a third DRX timer according to the target time unit; or, the first terminal activates, starts or resets a fourth DRX timer according to a third time unit.

The first terminal is in an active state before the third DRX timer expires or times out. Exemplarily, the third DRX timer includes a discontinuous reception inactive state timer drx_inactiveTimer. The timer duration of the third DRX timer may be referred to as a third duration for short.

In the case where the first terminal activates, starts or resets the third DRX timer according to the target time unit, it includes at least one of the following implementation manners.

First manner: the first terminal activates, starts or resets the third DRX timer at a starting moment of the target time unit.

For example, at the starting moment of slot m, the third DRX timer is activated, started or reset.

Second manner: the first terminal activates, starts or resets the third DRX timer at the end moment of the target time unit.

For example, at the end moment of slot m, the third DRX timer is activated, started or reset.

Third manner: the first terminal activates, starts or resets the third DRX timer in a second time unit obtained by adding a second offset to the target time unit; where the second offset is determined based on a processing time of the first terminal or the second terminal.

For example, at the starting moment or the end moment of the slot m+T2, the third DRX timer is activated, started or reset.

The timer duration of the third DRX timer may be referred to as the third duration for short. The timeout time unit of the third DRX timer is later than the starting time unit of all or part of the resources in the resource set.

In the case that the first terminal activates, starts or resets the fourth DRX timer according to the third time unit, the third time unit is determined according to the most front time unit in the time domain positions corresponding to all resources in the resource set.

The first terminal is in an active state before the fourth DRX timer expires or times out. Exemplarily, the fourth DRX timer includes a discontinuous reception inactive state timer drx_inactiveTimer. The timer duration of the fourth DRX timer may be simply referred to as a fourth duration.

For example, at the starting moment of slot m+A, the fourth DRX timer is activated, started or reset. A is a time interval (represented by the number of slots) between the most front slot in the time domain positions corresponding to all resources in the resource set and slot m.

Exemplarily, the resource set includes M resources, respectively corresponding to time domain positions T1, T2,..., TM, and T_first represents the minimum value in the set {T1, T2,..., TM}, that is, the most front time domain position, and UE1 determines the position to activate or reset the timer according to T_first. A represents the time interval between T_first and slot m.

To sum up, the method provided in this embodiment activates, starts or resets the third DRX timer according to the target time unit, so that the first terminal is in an active state within a period of time after sending the resource set (a period of time during which the second terminal may send the data) to ensure that the first terminal successfully receives the data sent by the second terminal.

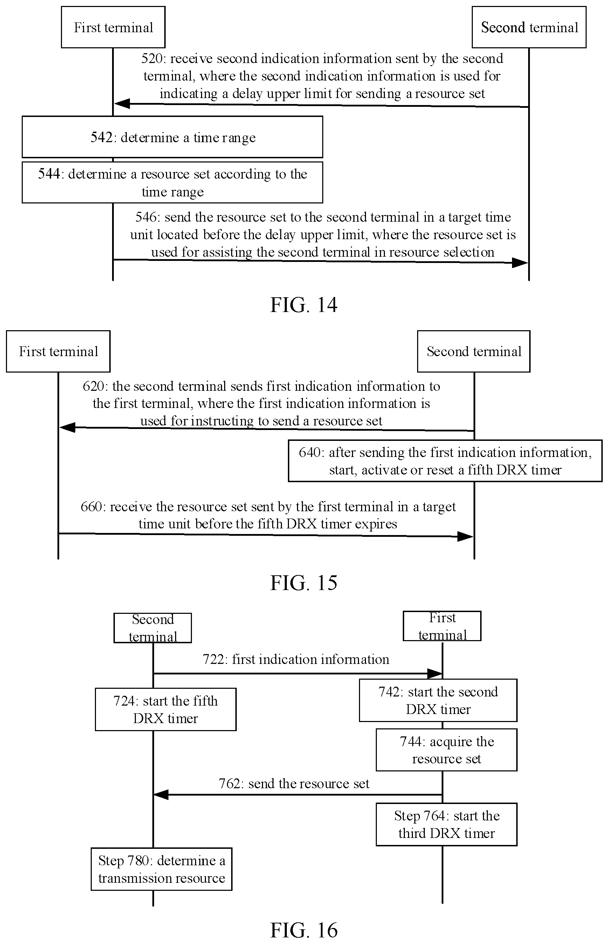

FIG. 14 shows a flowchart of an information sending method provided by another exemplary embodiment of the present application. This embodiment is exemplified by the method being executed by the first terminal. The method includes the following steps.

**In step 520:** the first terminal receives second indication information sent by the second terminal, where the second indication information is used for indicating a delay upper bound for sending a resource set.

For example, UE2 sends second indication information to UE1, where the second indication information is used for indicating delay information, such as a delay upper bound T_delay (latency boundary), and UE1 sends a resource set to UE2 before the delay upper bound. The delay upper bound may instead be implemented as a delay range.

Optionally, the delay information is determined according to the timer duration of the second DRX timer or the third DRX timer or the fourth DRX timer. For example, the second DRX timer or the third DRX timer or the fourth DRX timer is drx_inactiveTimer.

For example, UE2 sends first indication information to UE1 to trigger UE2 to send a resource set to UE1, and the first indication information includes second indication information, that is, the delay upper bound T_delay, and T_delay is less than the timer duration corresponding to the DRX parameter drx_inactiveTimer of UE1. When the UE1 receives the second indication information, it may activate or reset the drx_inactiveTimer, and before the drx_inactiveTimer times out or expires, the UE1 is in an active state. At this time, the resource set sent by UE1 to UE2 may include all the resources determined by UE1.

Illustratively, the second indication information and the first indication information are the same indication information. The second indication information and the first indication information are carried in the same sidelink channel.

**In step 542:** the first terminal determines a time range.

**In step 544:** the first terminal determines a resource set according to the time range.

**In step 546:** the first terminal sends the resource set to the second terminal in a target time unit located before the delay upper bound, where the resource set is used for assisting the second terminal in resource selection.

To sum up, in the method provided in this embodiment, after receiving the third indication information, the resource set is sent to the second terminal before the time limit, so that the first terminal is in an active state when sending the resource set, and the resource set is guaranteed to be successfully sent.

Illustratively, the above-mentioned second DRX timer, third DRX timer and fourth DRX timer are the same DRX timer, such as drx_inactiveTimer. Alternatively, the above-mentioned second DRX timer, third DRX timer and fourth DRX timer are different DRX timers.

Illustratively, the method for determining the timer duration of the second DRX timer, the third DRX timer or the fourth DRX timer includes but is not limited to at least one of the following manners.
- The third indication information sent by the second terminal

Optionally, the third indication information includes a Packet Delay Budget (PDB). The PDB indicates the delay requirement of the sidelink data. UE2 needs to send the sidelink data in the PDB. Therefore, the transmission resource selected by UE2 also needs to be within the range of the PDB. UE1 determines the timer duration according to the PDB, that is, the activation time of UE1. In this PDB, UE1 is in an active state, so it can receive sidelink data sent by UE2.

Optionally, the third indication information includes DRX parameter information of the first terminal. The DRX parameter information includes parameter information of the second DRX timer, the third DRX timer or the fourth DRX timer. Therefore, UE1 may determine the timer duration of the second DRX timer, the third DRX timer or the fourth DRX timer according to the third indication information.

Optionally, the third indication information is used for indicating the timer duration.

The third indication information is carried by PC5 interface Radio Resource Control (PC5-Radio Resource Control, PC5-RRC) signaling, Medium Access Control Control Element (MAC CE) or Sidelink Control Information (SCI).

Optionally, the third indication information and the first indication information may be carried in the same sidelink channel. Optionally, the third indication information and the first indication information are carried in the same indication information, that is, the third indication information and the first indication information are the same indication information.

Optionally, the third indication information, the second indication information, and the first indication information may be carried in the same sidelink channel. Optionally, the third indication information, the second indication information and the first indication information are carried in the same indication information, that is, the third indication information, the second indication information and the first indication information are the same indication information.
- Pre-configuration information
- Network configuration information

Optionally, the network configuration information is carried by Radio Resource Control (RRC), Downlink Control Information (DCI), System Information Block (SIB) information.
- First parameter

The first parameter includes a priority parameter or a delay parameter. Optionally, the first parameter further includes other Quality of Service (QoS) parameters.

Optionally, the first parameter is determined according to pre-configuration information, network configuration information or indication information of UE2.

For example, the priority parameter is included in the first indication information sent by UE2 to UE1, and UE1 determines the timer duration according to this parameter.

For example, the first indication information sent by UE2 to UE1 includes a delay parameter, and UE1 determines the timer duration according to this parameter.
- The last time unit corresponding to the resources in the resource set

For example, UE1 sends a resource set to UE2, and the rearmost time domain position in the time domain positions corresponding to the resources in the set is T_D, then the timer expiration moment determined according to the first duration should be greater than or equal to the time domain position of T_D. If the moment (or slot) at which UE2 sends the first indication information is k, then the moment corresponding to k+drx_T1 should be greater than or equal to the moment corresponding to T_Delay, where drx_T1 is determined according to the first duration.
- High layer signaling of the first terminal

The second DRX timer, the third DRX timer or the fourth DRX timer are specified by the high layer signaling of UE1, and UE1 also sends the information of the timer duration to UE2, so UE2 can also know the timer duration of UE1, and then can determine the active time of UE1.

FIG. 15 shows a flowchart of an information sending method provided by an exemplary embodiment of the present application. This embodiment is exemplified by the method being executed by the first terminal. The method includes the following steps.

**In step 620:** the second terminal sends first indication information to the first terminal, where the first indication information is used for instructing to send a resource set.

The time range is a time range used for determining the resource set. Exemplarily, the resource set is used for indicating resource(s) suitable for the first terminal, or used for indicating resource(s) not suitable for the first terminal.

Exemplarily, the first terminal determines the time range according to its own DRX parameter; or, the first terminal determines the time range according to its own DRX cycle; or, the first terminal determines the time range according to the dormant time in its own DRX cycle; or, the first terminal determines the time range according to the active time in its own DRX cycle. Optionally, the time range includes: at least one of a starting point or an end point of the time range.

Exemplarily, the time range does not include the time when the first terminal is in the dormant time; or the starting point of the time range does not belong to the time when the first terminal is in the dormant time; or the end point of the time range does not belong to the time when the first terminal is in the dormant time; or, any moment in the time range does not belong to the time when the first terminal is in the dormant time.

**In step 640:** after sending the first indication information, the second terminal starts, activates or resets the fifth DRX timer.

Exemplarily, the timeout time of the fifth DRX timer is later than the target time unit.

The second terminal starts the fifth DRX timer in the time unit of sending the first indication information. Alternatively, the second terminal starts the fifth DRX timer in a fourth time unit obtained by adding the time unit for sending the first indication information to a third offset value. The third offset value is determined according to the processing time of the first terminal or the second terminal.

Exemplarily, the fifth DRX timer is drx_inactiveTimer.

The manner of determining the fifth DRX timer includes at least one of the following manners.
- The third indication information sent by the second terminal

The second terminal sends third indication information to the first terminal, where the third indication information is used for indicating a delay upper bound for sending the resource set. The second terminal determines the timer duration of the fifth DRX timer according to the delay upper bound.
- The fourth indication information sent by the first terminal

The second terminal receives the fourth indication information sent by the first terminal, and determines the timer duration of the fifth DRX timer according to the fourth indication information. For example, the fourth indication information is used for indicating the DRX parameter of UE1, or the DRX parameter suggested to UE2, and the second terminal determines the timer duration of the fifth DRX timer according to the DRX parameter.
- Pre-configuration information
- Network configuration information

Optionally, the network configuration information is carried through RRC, DCI, SIB information.
- First parameter

The first parameter includes a priority parameter or a delay parameter. Optionally, the first parameter further includes other QoS parameters.

Optionally, the first parameter is determined according to the pre-configuration information, the network configuration information or indication information of UE2.

For example, the first indication information sent by UE2 to UE1 includes a priority parameter, and UE2 determines the timer duration according to the priority parameter.

For example, the first indication information sent by UE2 to UE1 includes a delay parameter, and UE2 determines the timer duration according to the delay parameter.
- The last time unit corresponding to the resources in the resource set

For example, UE1 sends a resource set to UE2, and the backmost time domain position in the time domain positions corresponding to the resources in the set is T_D, then the timer expiration time determined according to the first duration should be greater than or equal to the time domain position of T_D. If the moment (or slot) at which UE2 sends the first indication information is k, then the moment corresponding to k+drx_T1 should be greater than or equal to the moment corresponding to T_Delay, where drx_T1 is determined according to the first duration.
- High layer signaling of the second terminal

The second DRX timer, the third DRX timer or the fourth DRX timer are specified by the high layer signaling of UE1, and UE1 also sends the information of the timer duration to UE2, so UE2 can also know the timer duration of UE1, and thus can determine the active time of UE1.

In step 660: the second terminal receives the resource set sent by the first terminal in a target time unit before the fifth DRX timer expires.

The resource set includes: resources suitable for use by the first terminal, or resources not suitable for use by the first terminal, or candidate resources.

The resources suitable for use by the first terminal can also be understood as: resources recommended for use by the second terminal, or resources recommended for the second terminal to use when sending data to the first terminal; resources not suitable for use by the first terminal can be understood as: resources not recommended for use by the second terminal, or resources not recommended for use by the second terminal when sending data to the first terminal.

To sum up, the method provided by this embodiment starts, activates or resets the fifth DRX timer after sending the first indication information, and the timeout time of the fifth DRX timer is later than the target time unit, so that the second terminal is in an active state when the resource set is received, which ensures the successful reception of the resource set. When the second terminal uses the DRX mechanism, the coordination between the first terminal and the second terminal can be better implemented.

Illustratively, the timer duration in the foregoing embodiments is represented by at least one of the following manners:
the number of physical slots;
the number of slots available for sidelink transmission;
the number of slots in the resource pool.

FIG. 16 shows a flowchart of an information sending method provided by an exemplary embodiment of the present application. This embodiment is exemplified by the method being executed by the first terminal. The method includes the following steps.

**In step 722:** the second terminal sends first indication information to the first terminal, where the first indication information is used for instructing the first terminal to send a resource set.

**In step 724:** after sending the first indication information, the second terminal starts the fifth DRX timer.

Before the fifth DRX timer expires, the second terminal is in an active state. The second terminal may receive the resource set sent by the first terminal.

Optionally, the first indication information includes delay information, that is, a delay upper bound (latency boundary), and the first terminal needs to send the resource set before the delay upper bound. Further, the timer duration of the fifth DRX timer may be determined according to the delay upper bound.

**In step 742:** after receiving the first indication information, the first terminal starts or resets the second DRX timer.

Before the second DRX timer expires, the first terminal is in an active state.

Illustratively, the timer duration of the second DRX timer is determined according to the indication information sent by the second terminal, for example, if the first indication information includes a PDB, the timer duration of the second DRX timer is determined according to the PDB.

**In step 744:** the first terminal acquires the resource set.

For example, the resource set is determined according to the listening result.

**In step 762:** the first terminal sends the resource set to the second terminal in slot m.

The resources in the resource set are resources with little interference to the first terminal, that is, resources suitable for the first terminal, or resources preferred by the first terminal, or resources recommended for use by the second terminal.

The first terminal selects a transmission resource within the range of the delay upper bound according to the delay upper bound carried in the first indication information of the second terminal, and sends the resource set by using the transmission resource. For example, the transmission resource is a time-frequency resource located in the slot m and used for sending the resource set.

**In step 764:** the first terminal starts or resets the third DRX timer.

It should be noted that: the first terminal only executes one of steps 742 and 764, if the second DRX timer is started in step 742, the third DRX timer will not be started; if the second DRX timer is not started, then step 764 is executed to start the third DRX timer.

If the first terminal is in the active state in the slot m, the resources in the resource set include: all resources located after the slot m included in the resource set determined in step 742.

If the first terminal is in the inactive state in the slot m, the resources in the resource set may include the resources in the resource set determined in step 764, including: resources after the start time of the next drx_onDurationTimer timer after the slot m, excluding resources before the start of the third DRX timer.

**In step 780:** the second terminal determines a sending resource according to the resource set sent by the first terminal, and performs sidelink transmission.

It should be noted that, the above method embodiments can be divided or combined into other embodiments according to the understanding of those skilled in the art, which is not repeated in the present application one by one.

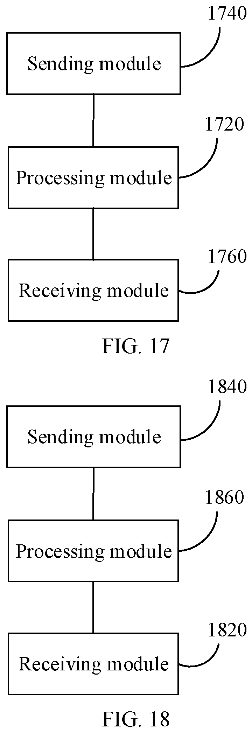

FIG. 17 shows a flowchart of an information sending apparatus provided by an exemplary embodiment of the present application. The apparatus may be implemented as a first terminal or a part of the first terminal. The apparatus includes:
a processing module 1720, configured to determine a time range.

The time range is a time range used for determining a resource set. Exemplarily, the resource set is used for indicating resources suitable for the first terminal, or used for indicating resources not suitable for the first terminal.

Optionally, the time range is related to the DRX state of the first terminal. In other words, at least one of the starting point and the end point of the time range is related to the DRX state of the first terminal. This embodiment is exemplified by taking that the starting point of the time range is related to the DRX state of the first terminal.

Exemplarily, the first terminal determines the time range according to its own DRX parameter; or, the first terminal determines the time range according to its own DRX cycle; or, the first terminal determines the time range according to the dormant time in its own DRX cycle; or, the first terminal determines the time range according to the active time in its own DRX cycle. Optionally, the time range includes: at least one of a starting point or an end point of the time range.

Exemplarily, the time range does not include the time when the first terminal is in the dormant time; or the starting point of the time range does not belong to the time when the first terminal is in the dormant time; or the end point of the time range does not belong to the time when the first terminal is in the dormant time; or, any moment in the time range does not belong to the time when the first terminal is in the dormant time.

The processing module 1720 is configured to determine a resource set according to the time range.

The processing module 1720 is configured to determine a resource suitable for its own use among one or more candidate resources within a time range, and add it to the resource set. Alternatively, in one or more candidate resources within the time range, a resource that is not suitable for self-use is determined and added to the resource set. Alternatively, in one or more candidate resources within the time range, a candidate resource is determined and added to the resource set.

The sending module 1740 is configured to send the resource set to the second terminal in a target time unit, where the resource set is used for assisting the second terminal in resource selection.

In a possible design of this embodiment, the processing module 1720 is configured to determine a starting point of the time range. Optionally, the first terminal is in an active state at the starting point of the time range.

In a possible design of this embodiment, the processing module 1720 is configured to determine the starting point of the time range according to the target time unit; or, the processing module 1720 is configured to determine the starting point of the time range according to a start time of the first DRX timer, to determine the starting point of the time range; or, the processing module 1720 is configured to determine the starting point of the time range according to indication information of the second terminal.

In a possible design of this embodiment, the processing module 1720 is configured to determine the target time unit as the starting point of the time range; or, the processing module 1720 is configured to determine a first time unit that is obtained by adding a first offset to the target time unit as the starting point of the time range; where the first offset is determined according to the processing time of the first terminal or the second terminal.

In a possible design of this embodiment, the first DRX timer includes a DRX active state timer drx_onDurationTimer.

In a possible design of this embodiment, the apparatus further includes:
a receiving module 1760, configured to receive first indication information sent by the second terminal, where the first indication information is used for instructing to send the resource set;
the processing module 1720 is configured to activate, start or reset the second DRX timer after receiving the first indication information.

The first terminal is in an active state before the second DRX timer expires. Optionally, the timeout time of the second DRX timer is later than the target time unit.

In a possible design of this embodiment, the apparatus further includes:
the processing module 1720 being configured to activate, start or reset the third DRX timer according to the target time unit;
where the first terminal is in an active state before the third DRX timer expires. Optionally, the timeout time of the third DRX timer is later than the target time unit.

In a possible design of this embodiment, the processing module 1720 is configured to activate, start or reset the third DRX timer at the starting moment of the target time unit;
or, the processing module 1720 is configured to activate, start or reset the third DRX timer at the end moment of the target time unit;
or, the processing module 1720 is configured to activate, start or reset the third DRX timer in a second time unit obtained by adding a second offset to the target time unit; where the second offset is determined according to the processing time of the first terminal or the second terminal.

In a possible design of this embodiment, the apparatus further includes:
the processing module 1720 being configured to activate, start or reset the fourth DRX timer in a third time unit; where the third time unit is determined according to the foremost time unit in time domain positions corresponding to all resources in the resource set;
where the first terminal is in an active state before the fourth DRX timer expires.

In a possible design of this embodiment, the apparatus further includes:
a receiving module 1760, configured to receive second indication information sent by the second terminal, where the second indication information is used for indicating a delay upper bound for sending the resource set;
a sending module 1740, configured to send the resource set to the second terminal in a target time unit located before the delay upper bound.

In a possible design of this embodiment, the delay upper bound is determined based on the second DRX timer or the third DRX timer or the fourth DRX timer, and the first terminal is in an active state before the second DRX timer or the third DRX timer or the fourth DRX timer expires.

In a possible design of this embodiment, the second DRX timer or the third DRX timer or the fourth DRX timer includes: a DRX inactive state timer drx_inactiveTimer.

In a possible design of this embodiment, the timer duration of the second DRX timer or the third DRX timer or the fourth DRX timer is determined by at least one of the following information:
third indication information sent by the second terminal;
pre-configuration information;
network configuration information;
a first parameter;
the last time unit corresponding to the resource in the resource set;
a high-level signaling of the first terminal.

In a possible design of this embodiment, the third indication information includes a PDB; or, the third indication information includes a DRX parameter of the first terminal; or, the third indication information is used for indicating the timer duration.

In a possible design of this embodiment, the third indication information is carried by PC5-RRC, MAC CE or SCI.

In a possible design of this embodiment, the third indication information and the first indication information are carried in the same sidelink channel.

In a possible design of this embodiment, the third indication information and the first indication information are the same indication information.

In a possible design of this embodiment, the network configuration information is carried by RRC, DCI, SIB information.

In a possible design of this embodiment, the first parameter includes a priority parameter or a delay parameter.

In a possible design of this embodiment, the timer duration is counted in at least one of the following manners:
the number of physical slots;
the number of slots available for sidelink transmission;
the number of slots in the resource pool.

FIG. 18 shows a block diagram of an information receiving apparatus provided by an exemplary embodiment of the present application. The apparatus may be implemented as a second terminal or a part of the second terminal. The apparatus includes:
a receiving module 1820, configured to receive, in a target time unit, a resource set sent by the first terminal, where the resource set is determined by the first terminal within a time range.

The time range is a time range used for determining the resource set. Exemplarily, the resource set is used for indicating a resource suitable for the first terminal, or used for indicating a resource not suitable for the first terminal.

Optionally, the time range is related to the DRX state of the first terminal. In other words, at least one of the starting point and the end point of the time range is related to the DRX state of the first terminal. This embodiment is exemplified by taking that the starting point of the time range is related to the DRX state of the first terminal.

Exemplarily, the first terminal determines the time range according to its own DRX parameter; or, the first terminal determines the time range according to its own DRX cycle; or, the first terminal determines the time range according to the dormant time in its own DRX cycle; or, the first terminal determines the time range according to the active time in its own DRX cycle. Optionally, the time range includes: at least one of a starting point or an end point of the time range.

Exemplarily, the time range does not include the time when the first terminal is in the dormant time; or the starting point of the time range does not belong to the time when the first terminal is in the dormant time; or the end point of the time range does not belong to the time when the first terminal is in the dormant time; or, any moment in the time range does not belong to the time when the first terminal is in the dormant time.

In a possible design of this embodiment, the apparatus further includes:
a sending module 1840, configured to send first indication information to the first terminal, where the first indication information is used for instructing to send the resource set;
a processing module 1860, configured to activate, start or reset a fifth DRX timer after sending the first indication information;
where the receiving module 1820 is configured to receive the resource set sent by the first terminal in a target time unit before the fifth DRX timer expires.

In a possible design of this embodiment, the sending module 1840 is configured to send second indication information to the first terminal, where the second indication information is used for indicating a delay upper bound for sending the resource set.

In a possible design of this embodiment, the sending module 1840 is configured to send third indication information to the first terminal, where the third indication information is used for indicating the timer duration of the fifth DRX timer.

In a possible design of this embodiment, the processing module 1860 is configured to determine the timer duration of the fifth DRX timer according to the delay upper bound.

In a possible design of this embodiment, the timer duration of the fifth DRX timer is determined by at least one of the following information:
third indication information sent by the apparatus;
fourth indication information sent by the first terminal;
pre-configuration information;
network configuration information;
a first parameter;
the last time unit corresponding to the resource in the resource set;
a high-level signaling of the second terminal.
In a possible design of this embodiment, the third indication information includes PDB;
or, the third indication information includes the DRX parameter of the first terminal;
or, the third indication information is used for indicating the timer duration.

In a possible design of this embodiment, the third indication information is carried by PC5-RRC, MAC CE or SCI.

In a possible design of this embodiment, the third indication information and the first indication information are carried in the same sidelink channel.

In a possible design of this embodiment, the third indication information and the first indication information are the same indication information.

In a possible design of this embodiment, the network configuration information is carried by RRC, DCI, SIB information.

In a possible design of this embodiment, the first parameter includes a priority parameter or a delay parameter.

In a possible design of this embodiment, the timer duration is counted in at least one of the following manners:
the number of physical slots;
the number of slots available for sidelink transmission;
the number of slots in the resource pool.

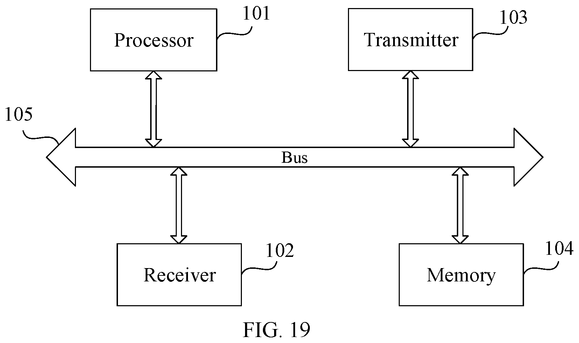

FIG. 19 shows a schematic structural diagram of a terminal provided by an exemplary embodiment of the present application. The terminal includes: a processor 101, a receiver 102, a transmitter 103, a memory 104, and a bus 105.

The processor 101 includes one or more processing cores, and the processor 101 executes various functional applications and information processing by running software programs and modules.

The receiver 102 and the transmitter 103 may be implemented as one communication component, which may be one communication chip.

The memory 104 is connected to the processor 101 through the bus 105.

The memory 104 may be configured to store at least one instruction, and the processor 101 may be configured to execute the at least one instruction, so as to implement various steps in the foregoing method embodiments. The transmitter 103 is used to perform the steps related to sending; the receiver 104 is used to perform the steps related to receiving; the processor 101 is used to perform the steps other than sending and receiving.

Additionally, the memory 104 may be implemented by any type or combination of volatile or non-volatile storage devices including, but not limited to, magnetic or optical disks, an Electrically-Erasable Programmable Read Only Memory (EEPROM), an Erasable Programmable Read Only Memory (EPROM), a Static Random Access Memory (SRAM), a Read-Only Memory (ROM), a magnetic memory, a flash memory, a Programmable Read-Only Memory (PROM).

In an exemplary embodiment, a computer readable storage medium is also provided, where the computer readable storage medium stores at least one instruction, at least one piece of program, a code set or an instruction set, and the at least one instruction, the at least one piece of program, the code set or the instruction set is loaded and executed by the processor to implement the information sending method or the information receiving method provided by each of the above method embodiments.

In an exemplary embodiment, there is also provided a computer program product or computer program including computer instructions stored in a computer readable storage medium, a processor of a communication device reads the computer instructions from the computer readable storage medium, and the processor executes the computer instructions, so that the communication device executes the information sending method or the information receiving method described in the above aspects.

Those of ordinary skill in the art can understand that all or part of the steps of implementing the above embodiments can be completed by hardware, or can be completed by instructing relevant hardware through a program, and the program can be stored in a computer readable storage medium. The storage medium mentioned above may be a read-only memory, a magnetic disk or an optical disk, etc.

The above descriptions are only optional embodiments of the present application, and are not intended to limit the present application. Any modifications, equivalent replacements, improvements, etc. made within the spirit and principles of the present application shall be included in the protection scope of the present application.

The following numbered clauses, describing aspects of the disclosure, are part of the description.
1. An information sending method, comprising:
   determining, by a first terminal, a time range;
   determining, by the first terminal, a resource set according to the time range;
   sending, by the first terminal, the resource set to a second terminal in a target time unit, wherein the resource set is used for assisting the second terminal in resource selection.
2. The method according to clause 1, wherein the determining, by the first terminal, the time range comprises:
   determining, by the first terminal, a starting point of the time range.
3. The method according to clause 2, wherein the first terminal is in an active state at the starting point of the time range.
4. The method according to clause 2 or 3, wherein the determining, by the first terminal, the starting point of the time range, comprises:
   determining, by the first terminal, the starting point of the time range according to the target time unit;
      or,
   determining, by the first terminal, the starting point of the time range according to a start time of a first discontinuous reception (DRX) timer;
      or,
   determining, by the first terminal, the starting point of the time range according to indication information of the second terminal.
5. The method according to clause 4, wherein the determining, by the first terminal, the starting point of the time range according to the target time unit, comprises:
   determining, by the first terminal, the target time unit as the starting point of the time range;
      or,
   determining, by the first terminal, a first time unit obtained by adding a first offset to the target time unit as the starting point of the time range; wherein the first offset is determined based on a processing time of the first terminal or the first second terminal.
6. The method according to clause 4, wherein the first DRX timer comprises a DRX active state timer drx_onDurationTimer.
7. The method according to any one of clauses 1 to 6, wherein the method further comprises:
   receiving, by the first terminal, first indication information sent by the second terminal, wherein the first indication information is used for instructing to send the resource set;
   after receiving the first indication information, activating, starting or resetting a second DRX timer by the first terminal;
   wherein the first terminal is in an active state before the second DRX timer expires.
8. The method according to clause 7, wherein a timeout time of the second DRX timer is later than the target time unit.
9. The method according to any one of clauses 1 to 6, wherein the method further comprises:
   activating, starting or resetting a third DRX timer by the first terminal according to the target time unit;
   wherein the first terminal is in an active state before the third DRX timer expires.
10. The method according to clause 9, wherein a timeout time of the third DRX timer is later than the target time unit.
11. The method according to clause 9 or 10, wherein the activating, starting or resetting the third DRX timer by the first terminal according to the target time unit, comprises:
   activating, starting or resetting the third DRX timer by the first terminal at a starting moment of the target time unit;
      or,
   activating, starting or resetting the third DRX timer by the first terminal at an end moment of the target time unit;
      or,
   activating, starting or resetting the third DRX timer by the first terminal in a second time unit obtained by adding a second offset to the target time unit; wherein the second offset is determined based on a processing time of the first terminal or the second terminal.
12. The method according to any one of clauses 1 to 6, wherein the method further comprises:
   activating, starting or resetting a fourth DRX timer by the first terminal in a third time unit; wherein the third time unit is determined based on a most front time unit in time domain positions corresponding to all resources in the resource set;
   wherein the first terminal is in an active state before the fourth DRX timer expires.
13. The method according to any one of clauses 1 to 6, wherein the method further comprises:
   receiving, by the first terminal, second indication information sent by the second terminal, wherein the second indication information is used for indicating a delay upper bound for sending the resource set;
   the sending, by the first terminal, the resource set to the second terminal in the target time unit, comprises:
      sending, by the first terminal, the resource set to the second terminal in a target time unit located before the delay upper bound.
14. The method according to clause 13, wherein the delay upper bound is determined based on a second DRX timer or a third DRX timer, and the first terminal is in an active state before the second DRX timer or the third DRX timer expires.
15. The method according to any one of clauses 7 to 14, wherein the second DRX timer or the third DRX timer or the fourth DRX timer comprises: a DRX inactive state timer drx_inactiveTimer.
16. The method according to any one of clauses 7 to 14, wherein a timer duration of the second DRX timer or the third DRX timer or the fourth DRX timer is determined by at least one of following information:
   third indication information sent by the second terminal;
   pre-configuration information;
   network configuration information;
   a first parameter;
   a last time unit corresponding to resources in the resource set;
   a high-level signaling of the first terminal.
17. The method according to clause 16, wherein:
   the third indication information comprises a packet delay budget (PDB);
      or,
   the third indication information comprises a DRX parameter of the first terminal;
      or,
   the third indication information is used for indicating the timer duration.
18. The method according to clause 16 or 17, wherein:
   the third indication information is carried by a PC5 interface radio resource control (PC5-RRC), a medium access control control unit (MAC CE) or sidelink control information (SCI).
19. The method according to clause 16 or 17, wherein:
   the third indication information and the first indication information are carried in a same sidelink channel.
20. The method according to clause 16 or 17, wherein:
   the third indication information and the first indication information are the same indication information.
21. The method according to clause 16, wherein:
   the network configuration information is carried by a radio resource control (RRC), downlink control information (DCI), a system information block (SIB).
22. The method according to clause 16, wherein:
   the first parameter comprises a priority parameter or a delay parameter.
23. The method according to clause 16, wherein the timer duration is counted in at least one of following manners:
   the number of physical slots;
   the number of slots available for sidelink transmission;
   the number of slots in a resource pool.
24. An information receiving method, comprising:
   receiving, by a second terminal, a resource set sent by a first terminal in a target time unit, wherein the resource set is determined by the first terminal within a time range.
25. The method according to clause 24, wherein the method further comprises:
   sending, by the second terminal, first indication information to the first terminal, wherein the first indication information is used for instructing to send the resource set;
   after sending the first indication information, activating, starting or resetting a fifth discontinuous reception (DRX) timer by the second terminal;
   the receiving, by the second terminal, the resource set sent by the first terminal in the target time unit, comprises:
      receiving, by the second terminal, the resource set sent by the first terminal in a target time unit before the fifth DRX timer expires.
26. The method according to clause 25, wherein the method further comprises:
   sending, by the second terminal, second indication information to the first terminal, wherein the second indication information is used for indicating a delay upper bound for sending the resource set.
27. The method according to clause 26, wherein the method further comprises:
   determining a timer duration of the fifth DRX timer according to the delay upper bound.
28. The method according to clause 25, wherein a timer duration of the fifth DRX timer is determined by at least one of following information:
   third indication information sent by the second terminal;
   fourth indication information sent by the first terminal;
   pre-configuration information;
   network configuration information;
   a first parameter;
   a last time unit corresponding to resources in the resource set;
   a high-level signaling of the second terminal.
29. The method according to clause 28, wherein:
   the third indication information comprises a packet delay budget (PDB);
      or,
   the third indication information comprises a DRX parameter of the first terminal;
      or,
   the third indication information is used for indicating the timer duration.
30. The method according to clause 28 or 29, wherein:
   the third indication information is carried by a PC5 interface radio resource control (PC5-RRC), a medium access control control unit (MAC CE) or sidelink control information (SCI).
31. The method according to clause 28 or 29, wherein:
   the third indication information and the first indication information are carried in a same sidelink channel.
32. The method according to clause 28 or 29, wherein:
   the third indication information and the first indication information are the same indication information.
33. The method according to clause 28, wherein:
   the network configuration information is carried by a radio resource control (RRC), downlink control information (DCI), system information block (SIB) information.
34. The method according to clause 28, wherein:
   the first parameter comprises a priority parameter or a delay parameter.
35. The method according to clause 28, wherein the timer duration is counted in at least one of following manners:
   the number of physical slots;
   the number of slots available for sidelink transmission;
   the number of slots in a resource pool.
36. An information sending apparatus, comprising:
   a processing module, configured to determine a time range;
   wherein the processing module is configured to determine a resource set according to the time range;
   a sending module, configured to send the resource set to a second terminal in a target time unit, wherein the resource set is used for assisting the second terminal in resource selection.
37. An information receiving apparatus, comprising:
   a receiving module, configured to receive a resource set sent by a first terminal in a target time unit, wherein the resource set is determined by the first terminal within a time range.
38. A terminal, comprising:
   a processor;
   a transceiver connected to the processor;
   a memory for storing executable instructions for the processor;
   wherein the processor is configured to load and execute the executable instructions to implement the method according to any one of clauses 1-35.
39. A computer readable storage medium, wherein executable instructions are stored in the readable storage medium, and the executable instructions are loaded and executed by a processor to implement the method according to any one of clauses 1 to 35.

## Claims

1. An information sending method, comprising:
determining, by a first terminal, a time range;
determining, by the first terminal, a resource set according to the time range;
sending, by the first terminal, the resource set to a second terminal in a target time unit, wherein the resource set is used for assisting the second terminal in resource selection.

2. The method according to claim 1, wherein the determining, by the first terminal, the time range comprises:
determining, by the first terminal, a starting point of the time range.

3. The method according to claim 2, wherein the first terminal is in an active state at the starting point of the time range.

4. The method according to claim 2 or 3, wherein the determining, by the first terminal, the starting point of the time range, comprises:
determining, by the first terminal, the starting point of the time range according to indication information of the second terminal.

5. The method according to any one of claims 1 to 4, wherein the method further comprises:
receiving, by the first terminal, second indication information sent by the second terminal, wherein the second indication information is used for indicating a delay upper bound for sending the resource set;
the sending, by the first terminal, the resource set to the second terminal in the target time unit, comprises:
sending, by the first terminal, the resource set to the second terminal in a target time unit located before the delay upper bound.

6. An information receiving method, comprising:
receiving, by a second terminal, a resource set sent by a first terminal in a target time unit, wherein the resource set is determined by the first terminal within a time range.

7. The method according to claim 6, wherein the method further comprises:
sending, by the second terminal, first indication information to the first terminal, wherein the first indication information is used for instructing to send the resource set;
after sending the first indication information, activating, starting or resetting a fifth discontinuous reception (DRX) timer by the second terminal;
the receiving, by the second terminal, the resource set sent by the first terminal in the target time unit, comprises:
receiving, by the second terminal, the resource set sent by the first terminal in a target time unit before the fifth DRX timer expires.

8. The method according to claim 7, wherein the method further comprises:
sending, by the second terminal, second indication information to the first terminal, wherein the second indication information is used for indicating a delay upper bound for sending the resource set.

9. An information sending apparatus, comprising:
a processing module, configured to determine a time range;
wherein the processing module is configured to determine a resource set according to the time range;
a sending module, configured to send the resource set to a second terminal in a target time unit, wherein the resource set is used for assisting the second terminal in resource selection.

10. The apparatus according to claim 9, wherein the processing module is further configured to: determine a starting point of the time range.

11. The apparatus according to claim 9 or 10, wherein the processing module is further configured to:
determine the starting point of the time range according to indication information of the second terminal.

12. The apparatus according to any one of claims 9 to 11, wherein the apparatus further comprises:
a receiving module, configured to receive second indication information sent by the second terminal, wherein the second indication information is used for indicating a delay upper bound for sending the resource set;
the sending module is further configured to:
send the resource set to the second terminal in a target time unit located before the delay upper bound.

13. An information receiving apparatus, comprising:
a receiving module, configured to receive a resource set sent by a first terminal in a target time unit, wherein the resource set is determined by the first terminal within a time range.

14. The apparatus according to claim 13, wherein the apparatus further comprises:
a sending module, configured to send first indication information to the first terminal, wherein the first indication information is used for instructing to send the resource set;
a processing module, configured to activate, start or reset a fifth discontinuous reception (DRX) timer after sending the first indication information;
wherein the receiving module is further configured to:
receive the resource set sent by the first terminal in a target time unit before the fifth DRX timer expires.

15. The apparatus according to claim 14, wherein
the sending module is further configured to send second indication information to the first terminal, wherein the second indication information is used for indicating a delay upper bound for sending the resource set.
